Europäisches Patentamt

European Patent Office

Office européen des brevets

(11) Publication number: **0 031 146**
**B1**

(12) **EUROPEAN PATENT SPECIFICATION**

(45) Date of publication of patent specification: **21.11.84**

(51) Int. Cl.³: **H 01 L 33/00, G 02 B 7/26**

(21) Application number: **80108023.5**

(22) Date of filing: **18.12.80**

(54) Coupling assembly of an optical fibre and a light source and method of assembling the same.

(30) Priority: **21.12.79 IT 6944979**

(43) Date of publication of application:
**01.07.81 Bulletin 81/26**

(45) Publication of the grant of the patent:
**21.11.84 Bulletin 84/47**

(84) Designated Contracting States:
**DE GB NL**

(56) References cited:
**DE-A-2 732 808**
**FR-A-2 372 444**
**GB-A-2 015 766**
**US-A-4 118 105**

**JOURNAL OF APPLIED PHYSICS, vol. 44, no. 6, June 1973, Princeton, US D. KATO: "Light coupling from a stripe-geometry GaAs diode laser into an optical fiber with spherical end", pages 2756-2758**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Basola, Carlo**
**Via dei Sormani 9**
**Milano (IT)**
Inventor: **Chiaretti, Guido**
**Via della Rondine 6**
**Milano (IT)**

(74) Representative: **Riederer Freiherr von Paar zu Schönau, Anton et al**
**Freyung 615 Postfach 2664**
**D-8300 Landshut (DE)**

(56) References cited:
**ELECTRONIC DESIGN, vol. 26, no. 13, June 1978, New York, US "Fiber-optic communications much bigger, much faster", pages 56-58**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a coupling assembly of an optical fibre and a light source and to a method of assembling the same.

It is known that the coupling between an optical fibre and a light source requires minimum tolerances in the geometrical arrangement of the parts in order to obtain the maximum efficiency. One of the most important geometrical parameters is the alignment between the optical fibre axis and the maximum radiance axis of the light source.

In fact, the imperfect coincidence between said axes of a lateral displacement between the fibre end and the light source causes considerable losses in the coupled optical power. In addition, in case of spherical-ended optical fibres, also the distance between the fibre and the source is to be taken into account.

By way of example, in case of a source characterized by a near field of 42 $\mu$m at 10% and 23 $\mu$m at 50% to be coupled with a step optical fibre having a core with a diameter of 80 $\mu$m, numerical aperture 0,162 and spherical end with curvature radius of 57 $\mu$m, there are tolerances of 15 $\mu$m at −3 dB in the lateral displacement and of 50 $\mu$m at −3 dB in the distance.

Therefore, a device and a method are required allowing the observance of the tolerances permitted in the subsequent steps of the assembling operations with an accuracy non inferior to 1 $\mu$m.

In addition, a specific method is necessary to make a coupling device in which the difference (relevant to coupling losses) between the efficiency value obtained when the assembling process is over and the maximum value that can be experimentally obtained, is minimized.

More particularly, the sequence of operations is to be based on the criterion according to which after each phase it is possible to correct unavoidable fibre displacements from the optimal position.

From FR—A—2 372 444, an assembly composed of a LED, a capillary tube for the fibre and some supporting means is known for which the assembly procedure comprises the steps of aligning the tube to the LED and then of inserting the fibre into the tube. This procedure does not allow the use of a spherical-ended optical fibre, as the fibre end becomes greater during the capillary tube anymore. Another assembling procedure is therefore necessary, in order to allow the perfect alignment of the fibre already inserted in the tube, and a device is required with a structure suitable for the procedure.

From DE—A—27 32 808, a light-emitting semiconductor device and a method of fabricating it are known, the device being coupled to an optical fibre. For this coupling, the LED is kept in a support while the optical fibre is supported by a lid member which is stuck to the LED support thereby resulting in problems with reference to alignment.

The described technical problems are solved by the coupling assembly of an optical fibre and a light source as defined in claim 1, that is easy to make, that does not require complex assembling apparatuses, that does not require high precision mechanical parts and that allows also the variations in coupled optical power to be kept within the range of 1% with respect to the case of coupling effected by micromanipulators acting on fibre and source.

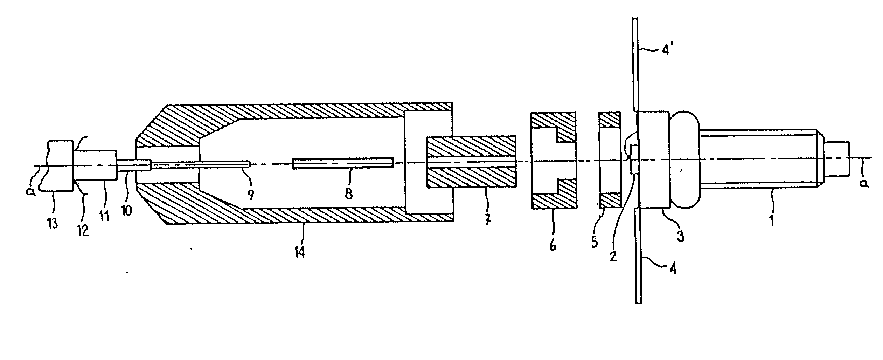

The foregoing and other characteristics of the present invention will become more apparent from the following description of a preferred way of embodiment of the same, given by way of example and not in a limiting sense, taken in connection with the annexed drawing in which there is represented the exploded sectional view of the parts forming the coupling device. In the drawing, there is represented on the right the support of the light source, consisting of a high radiance, head emission LED, for instance a Burrus LED. The light source, denoted by 2, is connected by means of leads 4 and 4', supported by an insulating plate 3, to power supply. A threaded stem 1 allows the device to be held and cooled.

Reference 5 denotes a first ring made of a material having electrical insulator properties and a low coefficient of thermal expansion, for instance of alumina ($AL_2O_3$). It will have parallel bases and its thickness will be inferior to the diameter, while the diameter of the hole will be such as to contain the source.

Reference 6 denotes a second ring, made of material similar to that used for the first ring and with equally parallel bases, but with a two-diameter hole; the part with a smaller hole is nearer the source. The annulus forming the bottom of the greater hole will lay in a plane parallel also to those containing the bases.

Reference 7 denotes a small cylinder advantageously made of a nickel-iron alloy known in the trade as kowar, axially drilled and having a base facing the source and lying in a plane perpendicular to the hole axis. The small cylinder has such a diameter that it can be easily placed in the hole with the greater diameter of ring 6, wherein it is supported by the internal annulus.

Reference 8 denotes a capillary tube advantageously made of steel. Its internal diameter is slightly superior to the external diameter of an optical fibre 9, furnished with protecting sheaths 10, 11, 12 and 13, and the external diameter is slightly inferior to the diameter of the axial hole of small cylinder 7.

Finally, reference 14 denotes a protecting cap made for instance of aluminium. At one end of said cap there is an aperture apt to house one of the sheaths for the protection of the optical fibre, while at the other end the aperture is such that the cap can house ring 6 and a part of ring 5.

The method of assembling the coupling device consists of a sequence of soldering phases among the described parts by means of particular adhesives and of alignment phases to optimize the optical coupling.

First ring 5 is soldered onto support plate 3, so that the light source is placed at the center of the ring. Resins with low coefficient of thermal expansion can be advantageously used as adhesives, so as to minimize possible variations in the coupled optical power due to thermal variations.

Then the capillary tube is soldered onto the fibre, by a sufficiently fluid resin, once it is free of any protective sheath, and then the end face of the fibre is spherically shaped.

Afterwards the small cylinder 7 is soldered to ring 6, making its alignment as accurate as possible.

Capillary tube 8, containing the fibre, is now inserted into the hole of small cylinder 7 and a resin layer is placed on one of the facing bases of rings 5 and 6.

Such operation is effected by feeding the light source and measuring at the same time the optical power outgoing from the fibre. A mutual translation between rings 5 and 6 is then effected to the attainment of maximum optical power, then said rings are held in a rigid position till the resin gets dry. Unavoidable displacements taking place in this phase are compensated for by the reoptimization of the alignment of the capillary tube 8 in the hole of small cylinder 7. The capillary tube is then fixed in this position by means of adhesive, avoiding displacement between the two parts.

Finally cap 14 is secured on the one end to rings 5 and 6 and on the other end to the sheath for the protection of optical fibre 9.

Modifications and variations can be made without going out of the scope of the invention. For instance, the axial hole of small cylinder 7 can extend along its axis so as to form a longitudinal slot.

**Claims**

1. Coupling assembly of an optical fibre and a light source, comprising:
— a support for said light source (2), comprising a threaded stem (1), an insulating plate (3) and leads (4, 4'), electrically connected to the light source, the light source and the leads being secured onto the insulating plate, that in turn is secured onto the threaded stem;
— a first ring (5), having mutually parallel bases, a thickness inferior to its diameter, and a diameter of the axial hole such that it can contain said light source, said first ring being secured to said insulating plate (3) along one of its bases;
characterized in that the assembly further comprises:
— a second ring (6), having mutually parallel bases and an axial hole having two portions with different diameters, the smaller diameter being nearer the source and the annulus forming the bottom of the hole with the greater diameter being parallel to its bases, said second ring being secured to said first ring (5) along its base having the smaller-diameter hole portion;
— a cylinder (7), axially drilled and with its bases lying in respective planes perpendicular to its rotation axis, said cylinder being placed in the greater diameter hole of said second ring (6) and secured therein;
— a capillary tube (8), having its internal diameter slightly greater than the diameter of said optical fibre (9), said capillary tube being secured inside the hole of said cylinder (7) and containing the optical fibre fixed therein;
— a cap (14), having at one end an aperture adapted to contain and hold said fibre and at the other end an aperture adapted to contain said second ring (6) and a part of said first ring (5), said cap being secured to said first and second rings.

2. Coupling assembly as in claim 1, characterized in that said cylinder (7) has an axial hole that radially extends so as to make a longitudinal slot.

3. Coupling assembly as in claim 1, characterized in that said first and second rings (5, 6) are made of alumina ($Al_2O_3$), said cylinder (7) is made of a nickel-iron alloy and said capillary tube is made of steel.

4. Method of assembling the coupling assembly as in any preceding claims, comprising the following steps:
— securing said first ring (5) onto said plate (3);
— securing said optical fibre (9) within said capillary tube (8);
—securing said cylinder (7) into the hole with the greater diameter of said second ring (6);
— insertion of said capillary tube (8) containing the optical fibre into the hole of said cylinder (7);
— aligning the optical axis of said optical fibre (9) to the maximum radiance axis of said light source (2) by translating said first ring (5) with respect to said second ring (6);
— securing said first ring (5) onto said second ring (6) in the position of optical alignment between optical fibre and light source;
— realigning the optical axis of said optical fibre (9) with the maximum radiance axis of said light source (2) by translating said capillary tube (8) inside said cylinder (7);
— securing said capillary tube (8) into said cylinder in the realigned position;
— securing said cap (14) onto said second ring (6) and onto a part of said first ring (5).

5. Method as in claim 4, characterized in that after securing said optical fibre (9) within said capillary tube (8), the fibre end is spherically-shaped.

## Revendications

1. Ensemble de couplage entre une fibre optique et une source de lumière comprenant:
— un support de la source de lumière (2), qui comprend une tige filetée (1), une plaque isolante (3), et des fils (4, 4') connectés électriquement à la source de lumière, cette source de lumière et ces fils étant fixés à la plaque isolante, qui à son tour est fixé à la tige filetée;
— un premier anneau (5), dont les bases sont mutuellement parallèles, l'épaisseur est inférieur à son diamètre et le diamètre du trou axial est tel qu'il peut contenir ladite source de lumière, ce premier anneau étant fixé à la plaque isolante (3) le long d'une de ses bases;
caractérisé en ce que l'ensemble comprend aussi:
— un deuxième anneau (6), dont les bases sont mutuellement parallèles et un trou axial a deux parties de diamètres différents, le diamètre plus petit étant plus près de la source et la couronne formant le fond du trou avec le diamètre plus grand, étant parallèle à la base, ce deuxième anneau étant fixé au premier anneau (5) le long de sa base avec la partie de trou de diamètre plus petit;
— un cylindre (7), percé de manière axiale et dont les bases se trouvent dans des plans perpendiculaires à son axe de rotation, ce cylindre étant placé dans le trou du deuxième anneau (2) à diamètre plus grand et étant fixé dedans;
— un tube capillaire (8) dont le diamètre intérieur est légèrement plus grand que le diamètre de la fibre optique (9), ce tube capillaire étant fixé à l'intérieur du trou du cylindre (7) et contenant la fibre optique fixée dedans;
— un capuchon (14), dont une extrémité a une ouverture adaptée à contenir et tenir la fibre et l'autre extrémité a une ouverture adaptée à contenir le deuxième anneau (6) et une partie du premier anneau (5), ce capuchon étant fixé au premier et deuxième anneaux.

2. Ensemble de couplage selon la revendication 1, caractérisé en ce que le cylindre (7) a un trou axial à extension radiale de manière à obtenir une rainure longitudinale.

3. Ensemble de couplage selon la revendication 1, caractérisé en ce que le premier et la deuxième anneaux (5, 6) sont constitués par alumine ($Al_2O_3$), le cylindre (7) est constitué par un alliage de ferronickel et le tube capillaire est constitué par acier.

4. Méthode d'assemblage de l'ensemble de couplage selon l'une des revendications précédentes, qui comprend les étapes suivantes:
— fixation du premier anneau (5) à la plaque (3);
— fixation de la fibre optique (9) dans le tube capillaire (8);
— fixation du cylindre (7) dans le trou du deuxième anneau (6) à diamètre plus grand;
— introduction du tube capillaire (8) contenant la fibre optique dans le trou du cylindre (7);
— alignement de l'axe optique de la fibre optique (9) selon l'axe à radiance maximum de la source de lumière (2) au moyen d'une translation du premier anneau (5) au respect du deuxième anneau (6);
— fixation du premier anneau (5) sur le deuxième anneau (6) dans la position d'alignement optique entre la fibre optique et la source de lumière;
— réalignement de l'axe optique de la fibre optique (9) avec l'axe de radiance maximum de la source de lumière (2) au moyen d'une translation du tube capillaire (8) dans le cylindre (7);
— fixation du tube capillaire (8) à l'intérieur du cylindre dans la position réalignée;
— fixation du capuchon (14) sur le deuxième anneau (6) et sur une partie du premier anneau (5).

5. Méthode selon la revendication 4, caractérisée en ce qu'après la fixation de la fibre optique (9) à l'intérieur du tube capillaire (8), l'extrémité de la fibre est modelée en forme sphérique.

## Patentansprüche

1. Koppelmontage einer Lichtleitfaser und einer Lichtquelle, mit:
— einem Träger für die Lichtquelle (2), mit einem Gewindebolzen (1), einer Isolierplatte (3) und Zuleitungen (4, 4'), die elektrisch mit der Lichtquelle verbunden sind, welche ebenso wie die Zuleitungen auf der Isolierplatte befestigt ist, die ihrerseits auf dem Gewindebolzen befestigt ist;
—einem ersten Ring (5), der zueinander parallelle Grundflächen aufweist, dünner als sein Durchmesser ist, einen Durchmesser seiner axialen Bohrung aufweist, der die Aufnahme der Lichtquelle gestattet, und an einer seiner Grundflächen an der Isolierplatte (3) befestigt ist;
dadurch gekennzeichnet, daß die Koppelmontage weiterhin folgende Teile umfaßt:
— einen zweiten Ring (6) mit zueinander parallelen Grundflächen und einer axialen Bohrung aus zwei Teilen unterschiedlichen Durchmessers, von denen der mit dem Kleineren Durchmesser näher an der Lichtquelle liegt und der den Bohrungsgrund der Bohrung mit dem größeren Durchmesser bildende Ringteil parallel zu den Grundflächen verläuft, wobei der zweite Ring entlang seiner Grundfläche mit dem den kleineren Durchmesser aufweisenden Bohrungsteil am ersten Ring (5) befestigt ist;
— einen Zylinder (7), der axial durchbohrt ist, dessen Grundflächen in jeweiligen Ebenen liegen, die im rechten Winkel zu seiner Rotationsachse verlaufen, und der in der den größeren Durchmesser aufweisenden Bohrung des zweiten Rings (6) angeordnet und darin befestigt ist;
— ein Kapillarrohr (8), dessen Innendurchmesser geringfügig größer ist als der Durchmesser der Lichtleitfaser (9) und das in der Bohrung des Zylinders (7) angeordnet ist und innen die Lichtleitfaser enthält;

— eine Kappe (14), die an einem Ende eine Öffnung zum Aufnehmen und Halten der Faser und am anderen Ende eine Öffnung zum Aufnehmen des zweiten Rings (6) und eines Teils des ersten Rings (5) aufweist und die mit dem ersten und dem zweiten Ring verbunden ist.

2. Koppelmontage nach Anspruch 1, dadurch gekennzeichnet, daß der Zylinder (7) eine sich radial so erstreckende Bohrung aufweist, daß ein in Längsrichtung verlaufender Schlitz entsteht.

3. Koppelmontage nach Anspruch 1, dadurch gekennzeichnet, daß der erste Ring (5) und der zweite Ring (6) aus Aluminia (Al$_2$O$_3$), der Zylinder (7) aus einer Nickel-Eisen-Legierung und das Kapillarrohr aus Stahl besteht.

4. Verfahren zum Zusammenbau der Koppelmontage nach einem der vorhergehenden Ansprüche, mit den folgenden Verfahrensschritten:

— Man befestigt den ersten Ring (5) an der Platte (3);

— man befestigt die Lichtleitfaser (9) im Kapillarrohr (8);

— man baut den Zylinder (7) in die den größeren Durchmesser aufweisende Bohrung des zweiten Rings (6) ein und befestigt ihn;

— man setzt das Kapillarrohr (8), das die Lichtleitfaser enthält, in die Bohrung des Zylinders (7) ein;

— man richtet die optische Achse der Lichtleitfaser (9) auf die maximale Strahlungsachse der Lichtquelle (2) aus, indem man den ersten Ring (5) im Bezug zum zweiten Ring (6) verschiebt;

— man legt den ersten Ring (5) am zweiten Ring (6) in der Stellung der optischen Ausrichtung zwischen der Lichtleitfaser und der Lichtquelle fest;

— man richtet die optische Achse der Lichtleitfaser (9) erneut auf die maximale Strahlungsachse der Lichtquelle (2) aus, indem man das Kapillarrohr (8) innerhalb des Zylinders (7) verschiebt;

— man baut das Kapillarrohr (8) in der neu ausgerichteten Stellung in den Zylinder ein und befestigt es;

— man befestigt die Kappe (14) auf dem zweiten Ring (6) und auf einem Teil des ersten Rings (5).

5. Verfahren nach Anspruch 4, dadurch gekennzeichnet, daß man nach dem Einbau der Lichtleitfaser (9) im Kapillarrohr (8) dem Faserende eine Kugelflächenform gibt.